# EUROPEAN PATENT APPLICATION

(11) **EP 4 847 323 A1**
(43) Date of publication of application: **02.12.2026**
(21) Application number: 24919558.7
(22) Date of filing: 18.04.2024
(51) Int. Cl.: B60R 16/023

(54) **VEHICLE-MOUNTED HIGH-SIDE DRIVER CONTROL CIRCUIT AND VEHICLE**

(30) Priority: 23.01.2024 CN 202410098685; 23.01.2024 CN 202420171839 U
(71) Applicant: Guangzhou Automobile Group Co., Ltd., Guangzhou, Guangdong 511434 (CN)
(72) Inventor: ZHANG, Weifeng, Guangzhou, Guangdong 511434 (CN); CHEN, Chao, Guangzhou, Guangdong 511434 (CN); WANG, Wei, Guangzhou, Guangdong 511434 (CN); CAI, Zhijun, Guangzhou, Guangdong 511434 (CN)
(74) Representative: Metida
(86) International application number: PCT/CN2024/088603
(87) International publication number: WO 2025/156468

(57) **Abstract**

A vehicle-mounted high-side driver control circuit and a vehicle including the same. The vehicle-mounted high-side driver control circuit at least includes: a power distribution channel including a current sampling resistor and a switch unit; a current detection and gate control module configured to control the switch unit connected thereto to be in an off state when detecting that a current across the current sampling resistor exceeds a threshold; an undervoltage detection module configured to control the switch unit to be in an off state through the current detection and control module when detecting undervoltage at the power distribution output during circuit power-on and after normal operation; and a state control module configured to receive an ON/OFF excitation signal from an MCU to control the switch unit to be in an on/off state, wherein the undervoltage detection module, the current detection and gate control module, and the switch unit are connected in series. The vehicle-mounted high-side driver control circuit can control the vehicle-mounted high-side driver safely and flexibly, and has the advantages of low cost, high safety and reliability, flexible customization of gains at all stages and good robustness.

## Description

The present application claims the priority of the Chinese patent application with the invention name "Vehicle-Mounted High-Side Driver Control Circuit and Vehicle" submitted to the China Patent Office on January 23, 2024, application No. 202410098685.1, and the Chinese patent application with the invention name "Vehicle-Mounted High-Side Driver Control Circuit and Vehicle" submitted to the China Patent Office on January 23, 2024, application No. 202420171839.0, and the entire contents of which are hereby incorporated by reference.

### TECHNICAL FIELD

The present application relates to the technical field of vehicle power supply, and in particular, to a vehicle-mounted high-side driver control circuit and a vehicle.

### BACKGROUND

With the promotion and application of three electric components (motor, battery, electric driver) of a vehicle and novel electronic and electrical architectures, a power distribution system in the vehicle needs to provide rated power for loads such as various domain controllers, electronic control units, motors, lamps and sensors, and also needs to provide safety mechanisms that match their respective functional safety requirement levels, including detection, diagnosis and state setting.

For a High Side Driver (HSD) in the vehicle, when a short-circuit, grounding or overcurrent fault occurs in loads or harnesses, if measures are not taken in time, the fault may directly damage a connected load or a controller where a driver ECU circuit is located, or even may cause the harnesses of the entire vehicle to suffer ablation or burning or catch fire due to overcurrent and overheating. Thus, the repair or replacement cost and impact caused by the latter should not be underestimated.

In the existing technologies, an intelligent high-side integrated chip that integrates various functions such as detection, diagnosis and protection of voltage, current, and temperature may be adopted. However, the integrated chip has the disadvantages of high cost and long production and supply cycles. Alternatively, a technical solution constructed based on discrete components may be adopted as well. The former offers high integration and is more cost-effective in applications involving high currents, while the latter is flexible in structure and is suitable for power distribution scenarios involving low currents.

However, in the existing technologies, for the development of high side drivers, either an integrated power distribution solution or a power distribution circuit constructed using discrete components has some shortcomings:

If the power distribution solution is constructed with MCU and software, the solution has significant shortcomings in response time and reliability and stability. Meanwhile, if there are software bugs or long software system debugging cycles, the risk of repetitive damage may be increased.

If the power distribution solution is constructed using pure circuit components, relevant circuits are constructed using different quantities of operational amplifiers, voltage comparators, relays and optocouplers in addition to using power MOSFETs and sampling resistors in general. In this solution, detection and self-locking are generally implemented independently, that is, the state self-locking loop is separated from detection. The existing solution has the disadvantages of a large number of components, complex circuitry, high cost and slightly high power consumption.

Meanwhile, in the existing technical solution, the inconsistency between the state self-locking loop and the detection state leads to additional power consumption. Moreover, both the case where the state self-lock loop cannot be stably set to an OFF state after power-on, and the case where the power distribution state is an ON state or a device is uncertain at this time can cause uncontrollable power output. Furthermore, since a gain of the state self-locking loop is output by a transistor, drastic gain changes in extreme scenarios may cause a state-locking function to fail, resulting in poor robustness.

### SUMMARY

The present application provides a vehicle-mounted high-side driver control circuit and a vehicle, which can control the vehicle-mounted high-side driver safely and flexibly, and has the advantages of low cost, safety and reliability, flexible customization of gains at all stages and good robustness, in order to solve a technical problem.

To solve the aforementioned technical problem, in one aspect of the present application, a vehicle-mounted high-side driver control circuit is provided, which at least including:
a power distribution channel including a current sampling resistor and a switch unit which are disposed between the power source input and the power distribution output for outputting input power;
a current detection and gate control module configured to control the gate level of the switch unit connected thereto to enable the switch unit to be in an off state when detecting that a current across the current sampling resistor exceeds a threshold or when receiving an OFF excitation signal from an MCU;
an undervoltage detection module connected to the current detection and gate control module, configured to control the switch unit to be in an off state through the current detection and control module when detecting undervoltage at the power distribution output during circuit power-on or after normal operation, and to control the switch unit to be in an on state through the current detection and control module when receiving an ON excitation signal from the MCU; and
a state control module configured to receive an OFF excitation signal from the MCU and output the OFF excitation signal to the current detection and gate control module to control the switch unit to be in an off state, and to receive an ON excitation signal from the MCU and output the ON excitation signal to the undervoltage detection module to control the switch unit to be in an on state,
wherein the undervoltage detection module, the current detection and gate control module, and the switch unit are connected in series.

The undervoltage detection module, the current detection and gate control module, and the switch unit form a positive feedback loop, where:
the current detection and gate control module locks the gate level of the switch unit connected thereto to a first level to enable the switch unit to be in an off state when detecting that the current across the current sampling resistor exceeds a threshold or when receiving an OFF excitation signal from the MCU; and,
the undervoltage detection module locks the gate level of the switch unit to a first level to enable the switch unit to be in an off state by controlling the switch unit and the current detection and gate control module to perform state self-locking when detecting that a difference between voltages at the power source input and the power source output exceeds a predetermined difference threshold; and the undervoltage detection module locks the gate level of the switch unit to a second level to enable the switch unit to be in an on state by controlling the switch unit and current detection and gate control module to perform state self-locking switching when receiving an ON excitation signal from the MCU.

The undervoltage detection module includes a two-stage inverting amplifier tube, the current detection and gate control module includes a one-stage inverting amplifier tube, the switch unit forms a one-stage inverting amplifier tube, and the three are cascaded to form a positive feedback loop with four stages of inverting amplifier tubes.

In the power distribution channel, one end of the current sampling resistor is connected to the power source input, and the other end is connected to the source of the switch unit; the drain of the switch unit is connected to the power distribution output; and the gate of the switch unit is connected to the current detection and gate control module.

The current detection and gate control module includes:
a first triode Q1 being a PNP triode, wherein an emitter of the first triode Q1 is connected to the power source input, a first resistor R1 and a first capacitor C1 are connected in parallel between the emitter and a base of the first triode Q1, and the base of the first triode Q1 is connected to an end of the current sampling resistor away from the power source input through a second resistor R2; a collector of the first triode Q1 is grounded through a fourth resistor R4 and the collector is connected to the gate of the switch unit; and the base of the first triode Q1 is connected to the gate of the switch unit through a third resistor R3 and the base leads out a first control line (Stoff).

The undervoltage detection module includes:
a second triode Q2 and a third triode Q3, the second triode Q2 being a PNP triode, and the third triode Q3 being an NPN triode, wherein
a sixth resistor R6 and a second capacitor C2 are connected in parallel between the emitter and the base of the second triode Q2; the base of the second triode Q2 is connected to the positive electrode of a diode D1, and the negative electrode of the diode is connected to the power distribution output through a seventh resistor; and the collector of the second triode Q2 is connected to the base of the third triode Q3 through an eighth resistor R8; and
the collector of the third triode Q3 is connected to the first control line, a ninth resistor R9 is connected between the emitter and the base of the third triode Q3, and the emitter of the third triode Q3 is grounded.

The state control module includes:
an OFF excitation processing unit having one end connected to an output line of an OFF excitation signal of the MCU and the other end connected to the first control line; and
an ON excitation processing unit having one end connected to an output line of an ON excitation signal of the MCU and the other end connected to the collector of the second triode Q2 of the undervoltage detection module through a second control line (Ston),
wherein the ON excitation signal is a high-level signal, and the OFF excitation signal is a low-level signal.

The ON excitation processing unit includes:
an ON excitation triode Qdpon being an NPN triode, wherein the base of the ON excitation triode is connected to the ON excitation signal output of the MCU through a first voltage division resistor Rdp1 and the base is grounded through a second voltage division resistor Rdp2; the emitter of the ON excitation triode is connected to the base; and the collector of the ON excitation triode is connected to the second control line.

The OFF excitation processing unit includes:
an OFF excitation triode Qdpoff being an NPN triode, wherein the base of the OFF excitation triode is connected to the OFF excitation signal output of the MCU through a third voltage division resistor Rdp3 and the base is grounded through a fourth voltage division resistor Rdp4; the emitter of the OFF excitation triode is connected to the base; and the collector of the OFF excitation triode is connected to the first control line.

The circuit includes: a voltage sampling module, connected to the power distribution output, configured to sample a voltage at the power distribution output and output the voltage to the MCU.

The switch unit is a Power-MOSFET (P-MOSFET).

Accordingly, in another aspect of the present application, a vehicle is further provided, including the aforementioned vehicle-mounted high-side driver control circuit.

Implementing an embodiment of the present application has the following beneficial effects:

The present application provides a vehicle-mounted high-side driver control circuit and a vehicle. The vehicle-mounted high-side driver control circuit that integrates a fault detection and state self-locking loop is formed by using four stages of inverting amplifiers. The obtained circuit has a compact structure and is integrated with the detection branch and the state self-locking loop, and has an independently set state and flexibly adjusted overcurrent and undervoltage thresholds. When the circuit experiences an abnormality (overcurrent or undervoltage), the power distribution channel can be quickly turned off to protect loads, harnesses, and load-stage power distribution components. After the state and fault are cleared, a trigger pulse is sent by the MCU to change the state of the self-locking loop, controlling the ON/OFF of the power distribution channel. Therefore, implementing the present application can ensure the high effectiveness of the circuit while maximizing the robustness of a high-side output circuit.

In a typical circuit in an embodiment of the present application, apart from using power MOSFETs (P-MOSFETs) and current sampling resistors, a core loop circuit only uses general-purpose components including three triodes, one diode, and several resistors and capacitors without the need for complex components including operational amplifiers, comparators, optocouplers and relays, thereby minimizing hardware cost, facilitating implementation, and maintaining lower power consumption and failure rate.

In an embodiment of the present application, the power distribution state is accurate and controllable. The ON/OFF state of the switch unit can be set by the MCU with independent pulses, and it is determined that the switch unit is in the OFF state when the circuit is powered on, which can avoid accidental activation. Meanwhile, the detection state and the self-locking state are coupled and correspond, resulting in a low static current. Furthermore, the circuit has the advantages of maximum robustness, customizable designs of gains at all stages, minimum gain variations in various extreme scenarios and flexible application scenarios, and is applicable to various vehicle models.

### BRIEF DESCRIPTION OF THE DRAWINGS

To more clearly illustrate the technical solutions in the embodiments of the present application or the existing technologies, the accompanying drawings to be used in the description of the embodiments or the existing technologies will be briefly introduced below. Obviously, the accompanying drawings described below are only some embodiments of the present application. Other drawings obtained by those skilled in the art based on these accompanying drawings without creative effort still fall within the scope of the present application.
FIG. 1 is a schematic functional module diagram of an embodiment of a vehicle-mounted high-side driver control circuit provided in the present application;
FIG. 2 is a schematic circuit principle diagram of a current detection and gate control module in FIG. 1;
FIG. 3 is a schematic circuit principle diagram of an undervoltage detection module in FIG. 1;
FIG. 4 is a schematic circuit principle diagram of an ON excitation processing unit in FIG. 1;
FIG. 5 is a schematic circuit principle diagram of a voltage sampling module in FIG. 1;
FIG. 6 is a schematic overall circuit principle diagram of an example in FIG. 1;
FIG. 7 is a circuit simulation waveform diagram of an application scenario in an embodiment of the present application;
FIG. 8 is a circuit simulation waveform diagram of another application scenario in an embodiment of the present application; and
FIG. 9 is a circuit simulation waveform diagram of yet another application scenario in an embodiment of the present application.

### DETAILED DESCRIPTION

To make the objectives, technical solutions, and advantages of the present application clearer, a detailed description of the present application will be provided below in conjunction with the accompanying drawings.

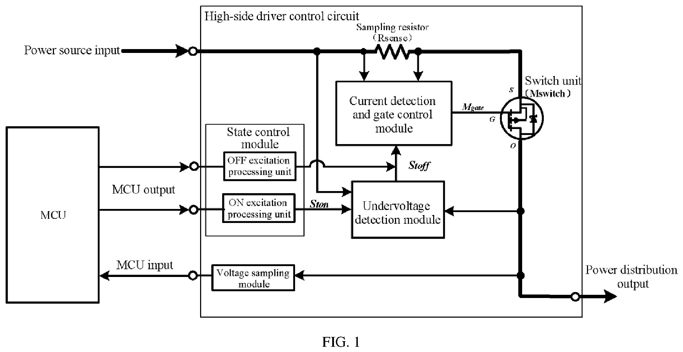

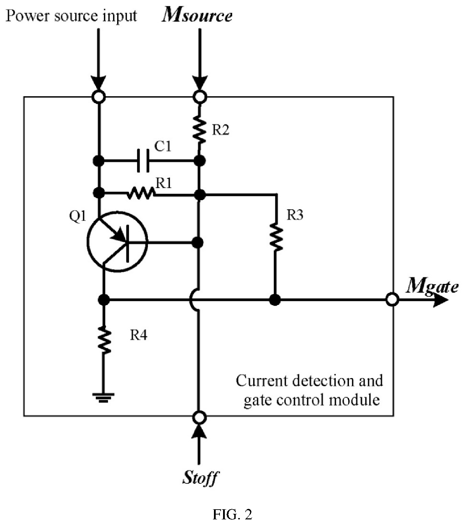

FIG. 1 shows a schematic functional module diagram of an embodiment of a vehicle-mounted high-side driver control circuit provided in the present application. Referring to FIGS. 2 to 6 together, in this embodiment, the vehicle-mounted high-side driver control circuit at least includes:
a power distribution channel including a current sampling resistor (Rsense) and a switch unit (Mswitch) which are disposed at the power source input and the power distribution output for outputting input power;
a current detection and gate control module configured to control the gate level of the switch unit connected thereto to enable the switch unit to be in an off state when detecting that a current across the current sampling resistor exceeds a threshold or when receiving an OFF excitation signal from an MCU;
an undervoltage detection module connected to the current detection and gate control module, configured to control the switch unit to be in an off state through the current detection and control module when detecting undervoltage at the power distribution output during circuit power-on or after normal operation, and to control the switch unit to be in an on state through the current detection and control module when receiving an ON excitation signal from the MCU;
a state control module configured to receive an OFF excitation signal from the MCU and output the OFF excitation signal to the current detection and gate control module to control the switch unit to be in an off state, and to receive an ON excitation signal from the MCU and output the ON excitation signal to the undervoltage detection module to control the switch unit to be in the on state; and
a voltage sampling module connected to the power distribution output, configured to sample a voltage at the power distribution output and output the voltage to the MCU,
wherein the undervoltage detection module, the current detection and gate control module, and the switch unit are connected in series.

It is understood that in an embodiment of the present application, the power distribution channel is cascaded with the current detection and gate control module and the undervoltage detection module to form a fault detection and state self-locking loop, wherein a state of the self-locking loop determines the ON/OFF of the switch unit of the power distribution channel.

The state control module and the voltage sampling module form a control and diagnostic interface between the power distribution control circuit and the MCU, wherein the state control module is configured to receive OFF excitation signal and ON excitation signal pulse commands to set the state of the self-locking loop; and the voltage sampling module is configured to return a voltage sampling value of the power distribution output to the MCU.

The undervoltage detection module, the current detection and gate control module, and the switch unit form a positive feedback loop, wherein the current detection and gate control module locks the gate level of the switch unit connected thereto to a first level to enable the switch unit to be in an off state when detecting that the current across the current sampling resistor exceeds a threshold or when receiving an OFF excitation signal from the MCU; and
the undervoltage detection module locks the gate level of the switch unit to a first level to enable the switch unit to be in an off state by controlling the switch unit and the current detection and gate control module to perform state self-locking when detecting that a difference between voltages at the power source input and the power source output exceeds a predetermined difference threshold; and the undervoltage detection module locks the gate level of the switch unit to a second level to enable the switch unit to be in an on state by controlling the switch unit and the current detection and gate control module to perform state self-locking switching when receiving an ON excitation signal from the MCU.

In a specific example, the undervoltage detection module includes a two-stage inverting amplifier tube, the current detection and gate control module includes a one-stage inverting amplifier tube, the switch unit forms a one-stage inverting amplifier tube, and the three are cascaded to form a positive feedback loop with four stages of inverting amplifier tubes. In the specific example, various functional modules can also be implemented using triodes, MOSFETs, or operational amplifiers.

Various functional modules in the circuit of the present application are described in detail below with reference to FIGS. 2 to 6.

In the power distribution channel, the current sampling resistor is indicated by Rsense in the figure, and the switch unit is indicated by Mswitch in the figure. In a practical example, the switch unit may be a Power-MOSFET (P-MOSFET) having a gate (G), a source (S), and a drain (O). More specifically, one end of the current sampling resistor is connected to the power source input, and the other end is connected to the source of the switch unit; the drain of the switch unit is connected to the power distribution output; and the gate of the switch unit is connected to the current detection and gate control module. The switch unit can also be used as a fourth inverting amplifier tube in this circuit.

As shown in FIG. 2, the current detection and gate control module includes:
a first triode Q1 being a PNP triode, wherein the emitter of the first triode Q1 is connected to the power source input, a first resistor R1 and a first capacitor C1 are connected in parallel between the emitter and a base of the first triode Q1, and the base of the first triode Q1 is connected to an end of the current sampling resistor away from the power source input through a second resistor R2; a collector of the first triode Q1 is grounded through a fourth resistor R4 and the collector is connected to the gate of the switch unit; and the base of the first triode Q1is connected to the gate of the switch unit through a third resistor R3 and the base leads out a first control line (Stoff). The first triode Q1 is used for current detection and as a third inverting amplifier tube in this circuit.

In a specific example, the working principle of the current detection and gate control module is as follows:
when the current in a power channel increases such that the voltage drop of Rsense is greater than a PN junction voltage of the first triode Q1 (typically 0.6V), the first triode Q1 is turned on, and the impedance between the collector and emitter of the first triode Q1drops sharply, forming a pull-up action on a gate line (Mgate line). The first capacitor C1 is a current detection filter capacitor to reduce the probability of false shutdown caused by current fluctuations. If the power distribution load is a large capacitor load, after the power distribution is turned on, the current flowing through the current sampling resistor Rsense rises instantly and exceeds an overcurrent threshold, but falls back below the threshold in a short time.

The overcurrent detection threshold can be calculated using the following formula:
${I}_{th} = \frac{{V}_{be} \left({R}_{1}+{R}_{2}\right)}{{R}_{1} {R}_{sense}}$ (1),
wherein *V*_{be} is the ON voltage of the first triode Q1, and *R*ₛₑₙₛₑ is the resistance value of the current sampling resistor.

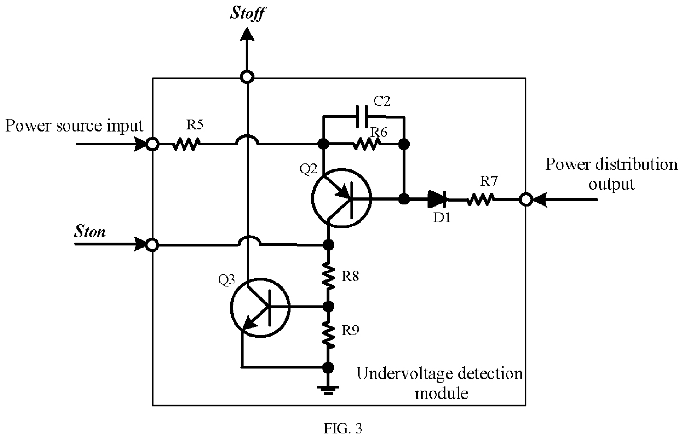

As shown in FIG. 3, the undervoltage detection module includes:
a second triode Q2 and a third triode Q3, the second triode Q2 being a PNP triode, and the third triode Q3 being an NPN triode, wherein
a sixth resistor R6 and a second capacitor C2 are connected in parallel between the emitter and the base of the second triode Q2; the base of the second triode Q2 is connected to the positive electrode of a diode D1, and the negative electrode of the diode is connected to the power distribution output through a seventh resistor; and the collector of the second triode Q2 is connected to the base of the third triode Q3 through an eighth resistor R8. The second triode Q2 is used for voltage detection and as a first inverting amplifier tube in this circuit; and
the collector of the third triode Q3 is connected to the first control line; a ninth resistor R9 is connected between the emitter and the base of the third triode Q3, and the emitter of the third triode Q3 is grounded. The third triode Q3 is used as a second inverting amplifier tube in this circuit.

In a specific example, the working principle of the undervoltage detection module is as follows:
when a load at the power distribution output experiences an abnormal fault such as output undervoltage (or similar to short circuit to ground), the voltage at the output drops significantly, and the difference between voltages at the power distribution output and the power source input increases such that the voltage drop of the sixth resistor R6 is greater than a PN junction voltage (typically 0.6V), thereby turning on Q2. In this case, the impedance between the collector and emitter of the second triode Q2 decreases sharply, forming a path of current flowing through the resistors R5, R8, and R9. In this case, the third triode Q3 is turned on, forming a pull-down action on the Stoff line, and then forming a pull-up action on the gate line (Mgate line).

Therefore, the pull-up actions on the gate line (Mgate line) caused by the two abnormal detection results mentioned above can cause the Mswitch to tend to be turned off, resulting in a decrease in current and a decrease in power distribution output voltage until the power distribution is completely turned off, thereby implementing the gate control function of the P-MOSFET.

The second capacitor C2 is a voltage detection filter capacitor to reduce the probability of false shutdown. Specifically, the voltage at the output recovers instantly when experiencing a rapid voltage drop that exceeds an undervoltage threshold.

In this embodiment, the undervoltage detection module detects the voltage at the output at the same time when being powered on. If the voltage at the output is at a low level at this time, both the triode Q2 and triode Q3 are turned on, forming a pull-up action on the gate line (Mgate line). Therefore, during power-on of the undervoltage detection module, the power distribution channel will remain in the OFF state all the time.

The undervoltage threshold *V*ₜₕ can be calculated using the following formula (2):
${V}_{th} = {V}_{BAT} - {V}_{out} = \frac{{V}_{be} \left({R}_{5}+{R}_{6}+{R}_{7}\right)}{{R}_{6}} + {V}_{d}$ (2),
wherein *V*_{BAT} is the voltage of the input power source; *V*ₒᵤₜ is the operating voltage required by the circuit load, and *V*_{d} is the ON voltage of the diode D1.

Referring to FIG. 1 again, the state control module further includes:
an OFF excitation processing unit having one end connected to an output line of an OFF excitation signal of the MCU and the other end connected to the first control line; and
an ON excitation processing unit having one end connected to an output line of an ON excitation signal of the MCU and the other end connected to the collector of the second triode Q2 of the undervoltage detection module through a second control line (Ston),
wherein the ON excitation signal is a high-level signal, and the OFF excitation signal is a low-level signal.

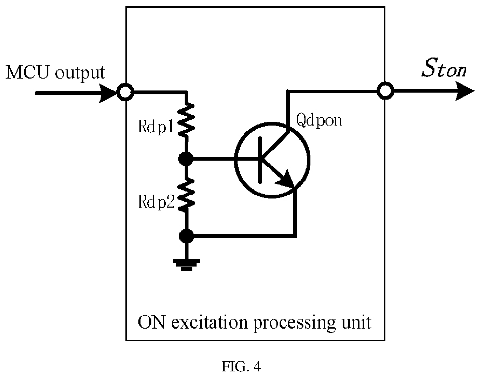

More specifically, as shown in FIG. 4, the ON excitation processing unit includes:
an ON excitation triode Qdpon, which is an NPN triode, wherein the base of the ON excitation triode is connected to the ON excitation signal output of the MCU through a first voltage division resistor Rdp1 and the base is grounded through a second voltage division resistor Rdp2; the emitter of the ON excitation triode is connected to the base; and the collector of the ON excitation triode is connected to the second control line.

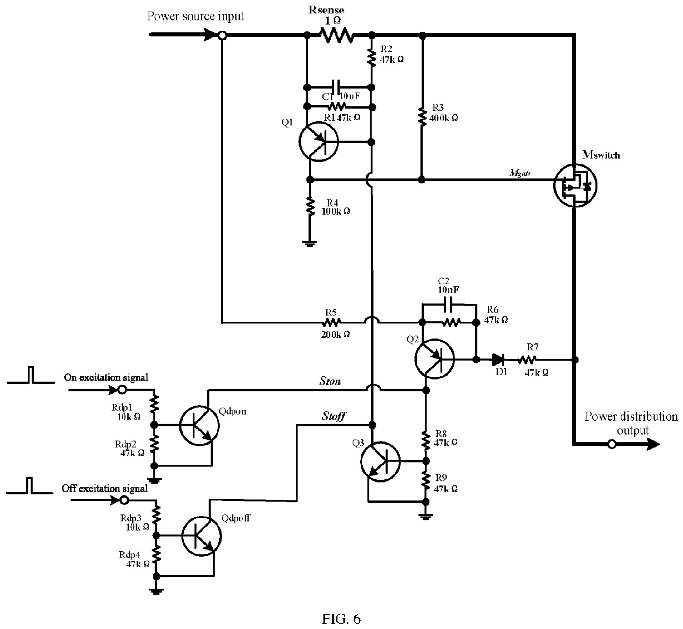

Similarly, referring to FIG. 6, the OFF excitation processing unit includes:
an OFF excitation triode Qdpoff, which is an NPN triode, wherein the base of the OFF excitation triode is connected to the OFF excitation signal output of the MCU through a third voltage division resistor Rdp3 and the base is grounded through a fourth voltage division resistor Rdp4; the emitter of the OFF excitation triode is connected to the base; and the collector of the OFF excitation triode is connected to the first control line.

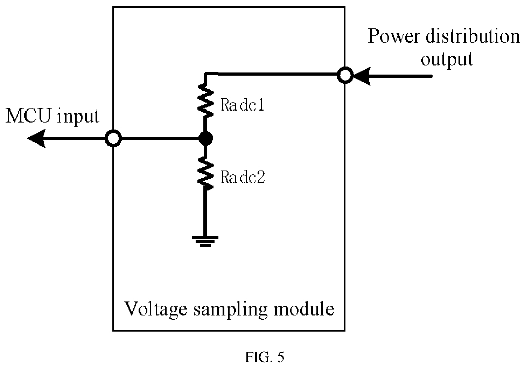

As shown in FIG. 5, the voltage acquisition module can be implemented using a resistor series voltage divider. The voltage acquisition module further includes:
a first sampling resistor Radc1 having a first end connected to the power distribution output and a second end grounded through a second sampling resistor Radc2 and connected to a voltage sampling terminal of the MCU.

In the present application, the adopted state self-locking loop has the principle of implementing state self-locking through a positive feedback loop in the circuit component process. Steady states of the two levels in the state self-locking loop correspond to ON and OFF states of the power distribution channel respectively. Meanwhile, due to the existence of a self-locking mechanism, the current state can be maintained automatically before power-off. The setting and rewriting of state are done by: injecting a stronger charge excitation at a specific node of the loop than that of the driving stage of the node, so the state of the loop can be set or rewritten to a state of an excitation attribute. The specific duration of a charge excitation pulse is related to a power distribution capacitor load, the heavier the capacitor load, the longer the duration. The specific duration should be adjusted and determined using a simulation method.

Referring also to FIG. 6, in a solution of the present application, a positive feedback loop with four stages of inverting amplifier circuits cascaded taking the transistor Q2-> Q3-> Q1-> Mswitch as a core is constructed. Compared to a typical two-stage gain in the existing technologies, a four-stage gain has a larger loop gain. It is understood that in the present application, the gain of each stage of the four stages is customizable (as in the aforementioned formulas), thus allowing for the design of larger loop gains. According to the feedback control principle in the control theory, the greater the open-loop gain, the stronger the locking capability, stability, and anti-interference capability of the closed-loop. Therefore, the state self-locking loop in the present application has stronger locking capability and stability. Meanwhile, applying a strong pull-down excitation to the Ston line can turn off the Q3 and Q1 in the self-locking loop and turn on the Mswitch and Q2, thereby setting the power distribution channel to the ON state; and applying a strong pull-down excitation to the Stoff line can turn on the Q3 and Q1 in the self-locking loop and turn off the Mswitch and Q2, thereby setting the power distribution channel to an OFF state. The MCU sends a pulse for a certain duration (1-5ms) to the OFF excitation processing unit or the ON excitation processing unit, pulling down a corresponding self-locking node, thus setting and rewriting the power distribution state.

In the solution of the present application, the gain of each amplifier stage in the self-locking loop is proportional to load impedance. Each load impedance is basically determined by the resistance at the output of each stage, ensuring minimum variations in various extreme scenarios. Small-signal AC impedance Zo1, Zo2, Zo3, and Zo4 of all amplifier stages are calculated by formulas 3 to 6.

The output small-signal AC loads Zo1, Zo2, Zo3, and Zo4 of all inverting amplifier stages of the self-locking loop are determined by the following formulas:
${Z}_{o 1} = {R}_{9}$ (3),
${Z}_{o 2} = \frac{{R}_{1} {R}_{2}}{{R}_{1} + {R}_{2}}$ (4),
${Z}_{o 3} = \frac{{R}_{3} {R}_{4}}{{R}_{3} + {R}_{4}}$ (5), and
${Z}_{o 4} = {R}_{load}$ (6),
wherein *R_{load}* is the load impedance at the power distribution output.

To further illustrate the principle and advantages of the circuit of the present application, examples are provided below.

Taking the circuit principle diagram shown in FIG. 6 as an example, the circuit is a 12V circuit of a vehicle-mounted high side driver, which has a rated current of 500mA, an overcurrent threshold of 1.2A, and an undervoltage threshold of 4.2V. 2N3906 is used as the PNP triode, 2N3904 is used as the NPN triode, and 1N4148 is used as the diode. The resistance values of all resistors are as follows: Rsense = 1 Ohm, R1 = R2 = R6 = R7 = R8 = R9 = 47K Ohm, R3 = 400K Ohm, R4 = 100K Ohm, R5 = 200K Ohm; C1=C2=10nF, and the default ON voltage of the diode and triode is 0.6V.

The overcurrent threshold is calculated according to formula (1), and the overcurrent threshold Iₜₕ is 1.2A.

The voltage threshold is calculated according to formula (2), and the undervoltage voltage threshold Vth is about 7 V_{be}, that is, 4.2V.

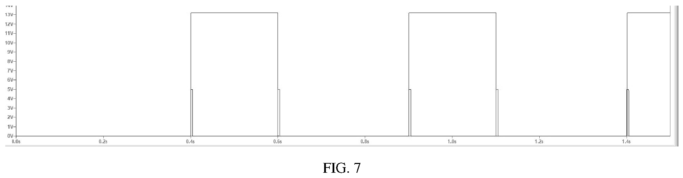

The circuit of an embodiment is imported into a simulation tool, three test cases are applied to perform functional simulation verification, and the obtained simulation curves are as shown in FIGS. 7 to 9.

FIG. 7 shows a power distribution output simulation waveform diagram obtained by applying an excitation signal under simulation test excitation 1 to the circuit of an embodiment, wherein the power distribution state after power-on is an OFF state; at the time of 0.4s and 0.9s, the MCU sends a high pulse lasting 2ms to Stone, switching the power distribution state from OFF state to ON state; and at the time of 0.6s and 1.1s, the load experiences a fault of short circuit to ground lasting 2ms, switching the power distribution state from ON state to OFF state. The overall embodiment circuit function meets expectations.

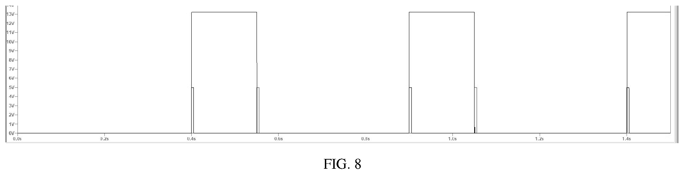

FIG. 8 shows a power distribution output simulation waveform diagram obtained by applying an excitation signal under simulation test excitation 2 to the circuit of an embodiment, wherein the power distribution state after power-on is an OFF state; at the time of 0.4s and 0.9s, the MCU sends a high pulse lasting 2ms to Stone, switching the power distribution stage from OFF stage to ON stage; and at time of 0.55s and 1.05s, the MCU sends a high pulse lasting 2ms to Stoff, switching the power distribution state from ON state to OFF state. The overall embodiment circuit function meets expectations.

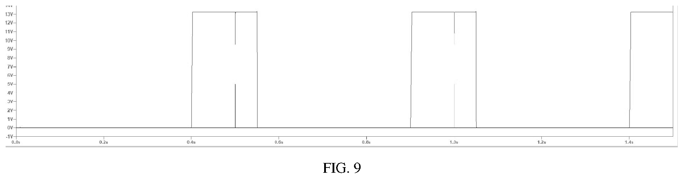

FIG. 9 shows a power distribution output simulation waveform diagram obtained by applying an excitation signal under simulation test excitation 3 to the circuit of an embodiment, wherein the power distribution state after power-on is an OFF state; at the time of 0.4s and 0.9s, the MCU sends a high pulse lasting 2ms to Stone, switching the power distribution state from OFF state to ON state; and at the time of 0.6s and 1.1s, the MCU sends a high pulse lasting 2ms to Stoff, switching the power distribution state from ON state to OFF state. The overall embodiment circuit function meets expectations. At the time of 0.55s and 1.05s, the load experiences a 5.5V undervoltage spike interference lasting 100µs, causing short-term fluctuations in power distribution. However, the power distribution state is successfully kept to the ON state, and the function meets expectations.

Accordingly, in another aspect of the present application, a vehicle is further provided, including the vehicle-mounted high-side driver control circuit as described in foregoing FIGS. 1 to 6. Further details can be found in conjunction with the foregoing descriptions of FIGS. 1 to 6, which will not be repeated here.

Implementing an embodiment of the present application has the following beneficial effects:
The present application provides a vehicle-mounted high-side driver control circuit and a vehicle. The vehicle-mounted high-side driver control circuit that integrates a fault detection and state self-locking loop is formed by using four stages of inverting amplifiers. The obtained circuit has a compact structure and is integrated with the detection branch and the state self-locking loop, and has an independently set state and flexibly adjusted overcurrent and undervoltage thresholds. When the circuit experience an abnormality (overcurrent or undervoltage), the power distribution channel can be quickly turned off to protect loads, harnesses, and load-stage power distribution components. After the state and fault are cleared, a trigger pulse is sent by the MCU to change the state of the self-locking loop, controlling the ON/OFF of the power distribution channel. Therefore, implementing the present application can ensure the high effectiveness of the circuit while maximizing the robustness of a high-side output circuit.

In a typical circuit in an embodiment of the present application, apart from using power MOSFETs (P-MOSFETs) and current sampling resistors, a core loop circuit only uses general-purpose components including three triodes, one diode, and several resistors and capacitors without the need for complex components including operational amplifiers, comparators, optocouplers and relays, thereby minimizing hardware cost, facilitating implementation, and maintaining lower power consumption and failure rate. In other examples, even if the three triodes mentioned above are replaced with MOSFETs, the cost is very low.

In an embodiment of the present application, the power distribution state is accurate and controllable. The ON/OFF state of the switch unit can be set by the MCU with independent pulses, and it is determined that the switch unit is in the OFF state when the circuit is powered on, which can avoid accidental activation. Meanwhile, the detection state and the self-locking state are coupled and correspond, resulting in a low static current. Furthermore, the circuit has the advantages of maximum robustness, customizable designs of gains at all stages, minimum gain variations in various extreme scenarios and flexible application scenarios, and is applicable to various vehicle models.

Those skilled in the art should understand that an embodiment of the present application may be provided as methods, devices, or computer program products. Therefore, the present application may take the form of a completely hardware embodiment, a completely software embodiment, or an embodiment combining software and hardware. Furthermore, the present application may take the form of a computer program product implemented on one or more computer-usable storage media (including but not limited to disk storage, CD-ROM, optical storage, etc.) containing computer-usable program codes.

The present application is described with reference to flowcharts and/or block diagrams of methods, devices (systems), and computer program products according to an embodiment of the present application. It should be understood that each process and/or block in the flowchart and/or block diagram, as well as combinations of the processes and/or blocks in the flowchart and/or block diagram, can be implemented by computer program instructions. These computer program instructions may be provided to a processor of a general-purpose computer, a special-purpose computer, an embedded processing computer, or other programmable data processing apparatus to produce a machine, such that the instructions, which are executed by the processor of the computer or other programmable data processing apparatus, produce means for implementing the functions specified in one or more processes of the flowchart and/or in one or more blocks of the block diagram.

The above-disclosed embodiments are merely preferred embodiments of the present application and should not be construed as limiting the scope of the present application. Therefore, any equivalent variations made in accordance with the claims of the present application shall still fall within the scope of the present application.

## Claims

1. A vehicle-mounted high-side driver (HSD) control circuit, **characterized by** at least comprising:
a power distribution channel comprising a current sampling resistor and a switch unit which are disposed between the power source input and the power distribution output for outputting input power;
a current detection and gate control module configured to control a gate level of the switch unit connected thereto to enable the switch unit to be in an off state when detecting that a current across the current sampling resistor exceeds a threshold or when receiving an OFF excitation signal from a microcontroller unit (MCU);
an undervoltage detection module connected to the current detection and gate control module, and configured to control the switch unit to be in an off state through the current detection and control module when detecting undervoltage at the power distribution output during circuit power-on or after normal operation, and to control the switch unit to be in an on state through the current detection and control module when receiving an ON excitation signal from the MCU; and
a state control module configured to receive an OFF excitation signal from the MCU and output the OFF excitation signal to the current detection and gate control module to control the switch unit to be in an off state, and to receive an ON excitation signal from the MCU and output the ON excitation signal to the undervoltage detection module to control the switch unit to be in an on state,
wherein the undervoltage detection module, the current detection and gate control module, and the switch unit are connected in series.

2. The circuit of claim 1, wherein the undervoltage detection module, the current detection and gate control module, and the switch unit form a positive feedback loop, wherein:
the current detection and gate control module locks the gate level of the switch unit connected thereto to a first level to enable the switch unit to be in an off state when detecting that the current across the current sampling resistor exceeds a threshold or when receiving an OFF excitation signal from the MCU; and
the undervoltage detection module locks the gate level of the switch unit to a first level to enable the switch unit to be in an off state by controlling the switch unit and the current detection and gate control module to perform state self-locking when detecting that a difference between voltages at the power source input and the power source output exceeds a predetermined difference threshold; and the undervoltage detection module locks the gate level of the switch unit to a second level to enable the switch unit to be in an on state by controlling the switch unit and the current detection and gate control module to perform state self-locking switching when receiving an ON excitation signal from the MCU.

3. The circuit of claim 2, wherein the undervoltage detection module comprises a two-stage inverting amplifier tube, the current detection and gate control module comprises a one-stage inverting amplifier tube, the switch unit forms a one-stage inverting amplifier tube, and the three are cascaded to form a positive feedback loop with four stages of inverting amplifier tubes.

4. The circuit of claim 3, wherein in the power distribution channel, one end of the current sampling resistor is connected to the power source input, and the other end is connected to the source of the switch unit; the drain of the switch unit is connected to the power distribution output; and the gate of the switch unit is connected to the current detection and gate control module.

5. The circuit of claim 4, wherein the current detection and gate control module comprises:
a first triode Q1 being a PNP triode, wherein an emitter of the first triode Q1 is connected to the power source input, a first resistor R1 and a first capacitor C1 are connected in parallel between the emitter and a base of the first triode Q1, and the base of the first triode Q1 is connected to an end of the current sampling resistor away from the power source input through a second resistor R2; a collector of the first triode Q1 is grounded through a fourth resistor R4 and the collector is connected to the gate of the switch unit; and the base of the first triode Q1 is connected to the gate of the switch unit through a third resistor R3 and the base leads out a first control line.

6. The circuit of claim 5, wherein the undervoltage detection module comprises:
a second triode Q2 and a third triode Q3, the second triode Q2 being a PNP triode, and the third triode Q3 being an NPN triode, and wherein
a sixth resistor R6 and a second capacitor C2 are connected in parallel between the emitter and the base of the second triode Q2; the base of the second triode Q2 is connected to the positive electrode of a diode D1, and the negative electrode of the diode is connected to the power distribution output through a seventh resistor; and the collector of the second triode Q2 is connected to the base of the third triode Q3 through an eighth resistor R8; and
the collector of the third triode Q3 is connected to the first control line, a ninth resistor R9 is connected between the emitter and the base of the third triode Q3, and the emitter of the third triode Q3 is grounded.

7. The circuit of claim 6, wherein the state control module comprises:
an OFF excitation processing unit having one end connected to an output line of an OFF excitation signal of the MCU and the other end connected to the first control line; and
an ON excitation processing unit having one end connected to an output line of an ON excitation signal of the MCU and the other end connected to the collector of the second triode Q2 of the undervoltage detection module through a second control line,
wherein the ON excitation signal is a high-level signal, and the OFF excitation signal is a low-level signal.

8. The circuit of claim 7, wherein the ON excitation processing unit comprises:
an ON excitation triode being an NPN triode, wherein the base of the ON excitation triode is connected to the ON excitation signal output of the MCU through a first voltage division resistor and the base is grounded through a second voltage division resistor; the emitter of the ON excitation triode is connected to the base; and the collector of the ON excitation triode is connected to the second control line.

9. The circuit of claim 7, wherein the OFF excitation processing unit comprises:
an OFF excitation triode being an NPN triode, wherein the base of the OFF excitation triode is connected to the OFF excitation signal output of the MCU through a third voltage division resistor and the base is grounded through a fourth voltage division resistor; the emitter of the OFF excitation triode is connected to the base; and the collector of the OFF excitation triode is connected to the first control line.

10. The circuit of any one of claims 1 to 9, comprising: a voltage sampling module connected to the power distribution output, and configured to sample a voltage at the power distribution output and output the voltage to the MCU.

11. The circuit of claim 10, wherein the switch unit is a Power-MOSFET.

12. A vehicle, **characterized by** comprising: the vehicle-mounted high-side driver control circuit of any one of claims 1 to 11.
